Europäisches Patentamt

European Patent Office

Office européen des brevets

(11) Publication number: **0 354 839**
**A2**

## (12) EUROPEAN PATENT APPLICATION

(21) Application number: **89402232.6**

(22) Date of filing: **08.08.89**

(51) Int. Cl.5: **C 04 B 38/00**
**C 04 B 35/56**

(30) Priority: **09.08.88 JP 199517/88**

(43) Date of publication of application:
**14.02.90 Bulletin 90/07**

(84) Designated Contracting States: **DE FR GB IT**

(71) Applicant: **OSAKA GAS COMPANY, LIMITED**
**1-2 Hiranomachi 4-chome Chuo-ku**
**Osaka-shi Osaka-fu (JP)**

(72) Inventor: **Hirota, Tamotsu**
**1.14.15, Shikanodai Nishi**
**Ikoma-shi Nara-ken (JP)**

Kawahara, Hideaki
1-129 Osakabe Yao-shi
Osaka-fu (JP)

Nakano, Hajime
2.8.15, Nishichiyogaoka
Nara-shi Nara-ken (JP)

Hachiya, Akihiro
6-32-407, Matsugamoto-cho
Ibaraki-shi Osaka-fu (JP)

Nishimura, Mikio
1-20-26 Sho Ibaraki-shi
Osaka-fu (JP)

(74) Representative: **Orès, Bernard et al**
**Cabinet ORES 6, Avenue de Messine**
**F-75008 Paris (FR)**

(54) Porous inorganic body and process for preparing the same.

(57) The present invention provides a porous inorganic shaped body comprising carbon particles up to 50 μm in average diameter and having fine pores at the surface thereof and silicon carbide component bonding the carbon particles; and a method of producing a porous inorganic shaped body comprising carbon particles having micro pores at the surface thereof and silicon carbide component binding these carbon particles, the method comprising shaping a mixture of carbon particles up to about 50 μm in average diameter and having micro pores at the surface thereof, silicon particles up to about 300 μm in average diameter and an organic binder vaporizable or decomposable under heating conditions, heating the shaped body to vaporize or decompose the organic binder, and firing the shaped body in an evacuated or inert atmosphere to obtain a sintered porous body.

EP 0 354 839 A2

**Description**

## POROUS INORGANIC BODY AND PROCESS FOR PREPARING THE SAME

FIELD OF THE INVENTION

This invention relates to a novel porous inorganic material essentially consisting of carbon and silicon carbide and a process for preparing the body.

BACKGROUND OF THE INVENTION

Porous silicon carbide materials are useful as heat resistant material, heat insulating material, chemical resistant material, catalyst carrier and the like, and the known processes for preparing the same include:

(1) An organic binder as the pore forming agent is admixed to a powdery mixture consisting of coarse to fine powders of silicon carbide in adjusted proportions, and the resultant mixture is fired at about 1600 to about 2400°C in a neutral or reducing atmosphere to produce recrystalized silicon carbide catalyst carrier (Japanese Examined Patent Publication No.46897/1982).

(2) A mixture of fine particles and ultra-fine particles of silicon carbide is fired at 1750 to 2500°C in an inert gas atmosphere to produce a porous sintered body of silicon carbide (Japanese Unexamined Patent Publication No.17472/1986).

(3) A carbon shaped body is heated in the presence of a silicon source material at temperatures higher than the melting point of silicon in an atmosphere free from oxygen to produce a shaped body formed of silicon carbide and unreacted carbon and the resulting body is fired to burn off the unreacted carbon component (Japanese Unexamined Patent Publication No.86074/1985).

(4) A powdery or granular carbon material and a powdery silicon material are covered with an organic binder, and the covered powdery materials are mixed. The mixture obtained is then shaped and heated at 800 to 1000°C to coke the organic binder, followed by a quick heating process carried out at about 1400 to about 1600°C at a heating rate of 5°C/min. in an inert gas atmosphere producing a shaped body of silicon carbide (Japanese Examined Patent Publication No.41867/1986).

The porous silicon carbide materials obtained as above, however, fails to exhibit satisfactory properties, for example, as catalyst carrier since the size of pores are large and the specific surface areas are small despite their high density.

SUMMARY OF THE INVENTION

It is an object of the invention to provide a new porous inorganic material having excellent properties such as a high specific area, improved strength, high abrasion resistance, good heat resistance etc.

Other objects and features of the invention will become aparent from the following description.

The present invention provides a porous inorganic shaped body comprising carbon particles up to about 50 μm in average diameter and having micro pores at the surface thereof and silicon carbide component binding these carbon particles.

The porous inorganic shaped body of the invention has a high specific surface area of at least 0.4 $m^2/g$.

The present invention further provides a method of producing a porous inorganic shaped body comprising carbon particles having micro pores at the surface thereof and silicon carbide component binding these carbon particles, the method comprising shaping a mixture of carbon particles up to about 50 μm in average diameter and having micro pores at the surface thereof, silicon particles up to about 300 μm in average diameter and an organic binder vaporizable or decomposable under heating conditions, heating the shaped body to vaporize or decompose the organic binder, and firing the shaped body in a vacuum or inert atmosphere to obtain a sintered porous body.

The carbon and silicon is usually used in a ratio of about 1 to about 6 mols of carbon per 1 mol of silicon.

We conducted extensive research in view of the prior art problems and found that a novel carbon-silicon carbide composite material can be obtained by shaping a mixture of carbon particles having a specific average diameter and silicon particles having a specific average diameter with use of an organic binder, heating the shaped body to decompose or evarporate off the binder and firing the shaped body.

We also found that the new shaped body of carbon-silicon carbide composite material has a high specific area and shows high strength, excellent resistance to abrasion and heat, etc. The present invention has been accomplished on the basis of this novel finding.

DETAILED DESCRIPTION OF THE INVENTION

EP 0 354 839 A2

Carbon particle materials useful in the invention are not limited, but preferably selected from the group of pitch coke, oil coke, foundry coke, metallurgical coke, graphite, carbon black, anisotropic carbon microbeads, isotropic carbon microbeades, etc. When the carbon particles have no micro pores, they are subjected to a conventional activating process to form micro pores at the surface thereof. The average diameter of the carbon particles is usually up to about 50 μm, preferably about 1 to about 10 μm, and most preferably about 1 to about 5 μm. The micro pores at the surface of the carbon particles are partly covered with the silicon carbide which will formed by the reaction of carbon particles with silicon particles and the specific area of carbon particles will be reduced. Thus, the starting carbon particles preferably have a specific surface area of about 1 $m^2/g$ or larger.

The average diameter of the silicon particles is usually up to about 300 μm, preferably about 1 to about 50 μm. The relationship between the diameter of carbon particles, the diameter of silicon particles and the sintering conditions will be explained in more detail later.

The organic binders to be used in the invention are not limited inasmuch as they are decomposable or vaporizable when heated. Examples of the organic binders are polyethylene glycol (hereinafter referred to as PEG), polyvinyl alcohol, methyl cellulose and the like. These binder materials decompose or dissipate when heated to about 400 to about 600°C.

The porous inorganic shaped material of the invention is prepared in the following steps. First, a mixture of carbon particles and silicon particles consisting of about 1 to about 6 mols of carbon per 1 mol of silicon is prepared and about 2 to about 10 parts by weight of an organic binder is added to 100 parts by weight of the mixture. The three-component mixture thus prepared is then shaped with or without the application of pressure. When the amount of silicon is less than the specified value, the strength of the final product is reduced whereas the excess amount of silicon would cover the surface of the carbon particles to a great extent to reduce the specific surface area thereof. When the three-component mixture of carbon, silicon and binder is shaped with the application of pressure, the pressure is usually about 250 to about 1500 $kgf/cm^2$ though it is not critical.

The shape or form and sizes of shaped body are not limited and determined according to the requirements of the use. Typical forms of the body are pillar or column-type, granular type, ball type, pellet, etc. When the final product is used as the carrier of a catalyst, the shaped body generally is a ball about 1 to about 15 mm in diameter.

The shaped body thus obtained is heated at about 400 to about 600°C to eliminate the organic binder. The atomosphere during the heating step is not critical inasmuch as it can prevent inflammation or explosion of the fume of the vaporized or decomposed binder. The heating may be conducted in air, in an inert gas such as Ar, in a reducing gas such as $H_2$, etc. The heating rate of the shaped body is usually about 1 to about 10°C/min. preferably about 3 to 5°C/min. and the body is kept at a temperature higher than the decomposition temperature of the organic binder employed for about 30 minutes to about 2 hours. Under these heating conditions, the organic binder is effectively eliminated. When the heating rate is too low, the productivity is reduced. With excessive heating rate, the organic binder decomposes so quickly that the pressure within the shaped body is highly elevated and the carbon particles are separated in distance, thus weakening the strength of the final product to be obtained after sintering. The heating rate, holding time, etc. during the heating step can be greatly variable depending on the size of the shaped body, particle sizes of carbon and silicon, the kind of organic binder used, the ratio of the three components, etc. Thus, heating conditions outside the above-referred ranges may be employed in some cases.

The shaped body from which the organic binder is eleiminated is then fired or sintered in a reduced pressure or in an inert atmosphere, i.e. in an atmosphere of the substantial absence of oxygen. When the firing step of the shaped body is continuously conducted in the same furnace as used in the heating step, one of the following procedures may be employed: (a) to evacuate the furnace after the heating step, introduce an inert gas such as Ar and start the sintering; (b) to remove the decomposed gas of organic binder while introducing a stream of $H_2$ gas into the furnace during the heating step, evacuate the furnace, introduce an inert gas such as Ar and start the sintering. Alternatively, the shaped body after the heating step can be fired in a closed container which is highly evacuated or contains only a very small amounts of oxygen. Further, the shaped body may be placed in an inner vessel which is in turn placed in an outer vessel which contains a reducing carbon material such as coke, the dual vessel is evacuated to eliminate oxygen-containing air and replaced with an inert gas such as Ar, and the shaped body placed in the dual vessel is continuously heated to remove decomposed organic gas and sintered in a furnace. In this last mode of heating and firing, oxygen entering the dual vessel reacts with the carbon component in the reducing agent and does not affect the shaped body.

Generally, carbon reacts with silicon at two stages: the solid phase reaction at a temperature from about 1000 or 1100°C to up to the melting point of silicon (the melting point of pure silicon is 1414°C, but commercial silicon contains small amounts of impurities and the melting point thereof is variable depending on the kinds and amounts of impurities); and the liquid phase reaction above the melting point of silicon. The solid phase reaction proceeds easily and quickly when the particle sizes of carbon and silicon are smaller. Since the fired product formed by the solid phase reaction is low in strength, it is preferable to use large-sized particles of carbon and silicon to reduce the contact areas of the particles and control the solid phase reaction. However, it is desirable to use carbon particles of smaller size to increase the specific surface area of the final fired product. Thus, the present invention employs carbon particles of usually up to about 50 μm, preferably about 1 to about 10 μm, most preferably about 1 to about 5 μm in view of the above contradictory requirements.

3

The silicon particles are preferably larger than the carbon particles so as to control the solid phase reaction. However, when excessively large particles of silicon are used, large voids are formed within the fired body and the strength of the body is lowered when silicon particles melt. Further, the melted silicon tends to cover the surface of the carbon particles and reduce the specific surface area thereof. In consideration of these phenomena, the present invention uses silicon particles of usually up to about 300 μm, preferably about 1 to about 50 μm.

When the reaction is carried out at a temperature near the melting point of silicon particles between the carbon particles and the silicon particles of specified sizes, silicon particles are converted to silicon carbide particles and act as the binder component of the carbon particles with a strong bonding force and without covering the substantial part of the surface of carbon particles. Thus, fired products excellent in both strength and specific surface area are obtained. However, since it is technically not always easy to effect the reaction under the ideal conditions as stated above, it is preferable to conduct the reaction between the carbon particles and the silicon particles at the temperature range from about 1350 to about 1750°C where the reaction proceeds predominantly in liquid phase but partly in solid phase. It is also preferable to raise the temperature of the shaped body from which the organic binder has been eliminated at rates such that the silicon particles in the shaped body gradually change from solid state to liquid state. The rate of raising temperature mainly depends on the size of shaped body, volume and capacity of the furnace, etc., and usually at least 3°C/min., preferably about 20 to about 100°C/min.

The porous inorganic body of the invention has a unique structure wherein carbon particles up to about 50 μm in diameter and having fine pores at the surface are bonded with silicon carbide component. The porous inorganic product of the invention has high bulk density, apparent porosity, specific surface area and pore volume which are mainly attributable to the presence of carbon particles and improved strength which is mainly attributable to the presence of silicon carbide.

The representative properties of the porous material of the invention are given below.

| | |
|---|---|
| Bulk density (g/cm$^3$) | 1.33 - 1.55 |
| Apparent porosity (%) | 26 - 50 |
| Specific surface area (m$^2$/g) | 0.4 - 27 |
| Pore volume (cc/g) | 0.1 - 7 |
| Compression strength (kgf/cm$^2$) | 290 - 800 |

The porous body of the invention has micro pores, high specific surface area and excellent in strength, resistance to abrasion and chemicals. With these properties, the material of the invention is useful as a carrier of catalyst, and in particular as a carrier of catalyst used in a fluidized bed. Further, the product containing as the main component carbon particles exhibits particularly remarkable effects as the catalyst carrier in the field of petroleum chemistry.

The porous body of the invention is also very useful as a sliding element with or without impregnating a lubricating oil.

Given below are examples to illustrate the invention.

## Example 1

To a 100 parts by weight of a powdery mixture of pitch coke particles (3 mol) and silicon particles (1 mol) was admixed 5 parts by weight of PEG, and the mixture obtained was molded at room temperature under the pressure of 510 kg/cm$^2$ to produce a shaped body 17 mm in diameter and 20 mm in height.

The shaped body was placed in a furnace and heated to 500°C at a heating rate of 5°C/min. and kept at 500°C for 60 minutes to eliminate PEG. The furnace was then evacuated to a reduced pressure of 10$^{-2}$Torr and the shaped body was fired at 1450°C for 20 minutes in Ar gas atmosphere. During the temperature-raising step, the temperature was raised from 1100°C to 1450°C at a rate of 60°C/min.

Table 1 shows the relationship between the particle sizes of carbon (pitch coke particles) and silicon and the physical properties of the sintered products.

Table 1

| No. | Average size of carbon particle ($\mu$m) | Average size of silicon particle ($\mu$m) | Specific surface area ($m^2/g$) | Compression strength ($kgf/cm^2$) | Bulk density ($g/cm^3$) |
|---|---|---|---|---|---|
| 1 | 2.5 | 1 | 11.5 | 500 | 1.40 |
| 2 | 2.5 | 44> | 11.3 | 670 | 1.42 |
| 3 | 2.5 | 100 | 6.4 | 320 | 1.47 |
| 4 | 2.5 | 300 | 5.0 | 250 | 1.50 |
| 5 | 44> | 300 | 1.4 | 250 | 1.47 |
| 6 | 44> | 1 | 0.94 | 120 | 1.25 |
| 7 | 44> | 44> | 0.71 | 120 | 1.23 |
| 8 | 100 | 100 | 0.6 | 180 | 1.31 |
| 9 | 300 | 300 | 0.3 | 210 | 1.42 |

Note : Sample No.9 was fired at 1500°C for 15 hours and the temperature raising rate was 60°C/min. from 1100°C to 1500°C.

The results given in Table 1 indicate that a combination of carbon particles up to 44 μm and silicon particles up to 300 μm results in the production of fired body with high strength and high specific surface area.

Example 2

The procedures of Example 1 were repeated with the exception that pitch coke particles having fine pores and 57 m²/g in specific surface area and 2.5 μm in average size and silicon particles 20 μm in average size were used, and the ratio of both particles were varied.

Table 2 shows the relationship between the ratio of both particle materials (molar ratio) and the physical properties of the fired products.

Table 2

| Carbon: Silicon (molar ratio) | Specific surface area (m²/g) | Compression strength (kgf/cm²) | Bulk density (g/cm³) |
|---|---|---|---|
| 1 : 1 | 0.43 | 520 | 1.52 |
| 2 : 1 | 7.0 | 620 | 1.47 |
| 2.5 : 1 | 11.8 | 800 | 1.46 |
| 3 : 1 | 16 | 670 | 1.43 |
| 4 : 1 | 21 | 470 | 1.39 |
| 4.5 : 1 | 26 | 330 | 1.37 |
| 5 : 1 | 24 | 330 | 1.37 |
| 6 : 1 | 26 | 300 | 1.32 |

Table 2 indicates that fired bodies each having a specific surface area higher than 0.4 m²/g and a compression strength more than 300 kgf/cm² were obtained when silicon: carbon molar ratio is in the range of 1:1 to 6. Particularly, when the ratio is in the range of 1:2 to 6, sintered bodies having a very high specific surface area of more than 7 are formed.

Example 3

The procedures of Example 1 were repeated with the exception that pitch coke particles having fine pores and 57 m²/g in specific surface area and 2.5 μm in average diameter and silicon particles 20 μm in average diameter were used, and the firing temperatures were changed to the range between 1350 to 1650°C.

Table 3 shows the relationship between the firing temperature and the physical properties of the fired products.

Table 3

| Firing temperature (°C) | Conversion ratio (%) | Compression strength (kgf/cm²) |
|---|---|---|
| 1250 | 52 | 520 |
| 1300 | 85 | - |
| 1350 | 100 | 600 |
| 1400 | 100 | - |
| 1450 | 100 | 670 |
| 1500 | 100 | - |
| 1550 | 100 | - |
| 1600 | 100 | - |
| 1650 | 100 | - |
| 1700 | 100 | - |
| 1750 | 100 | 360 |

In Table 3, conversion ratio was calculated as follows. The fired body was subjected to X-ray diffraction to detect the peak for Si and the peak for SiC and to prepare the analytical curve and then the values of Si and SiC were compared. Thus, the conversion ratio of 100% indicates that the peak of Si does not exist.

As understood from the results of Table 3, Si is completely converted to SiC when the firing temperature is 1350°C or higher.

The strength of the fired body sintered at 1750°C is lower than those sintered at lower temperatures. This reduced strength may be attributable to the fact that the viscosity of Si liquefied at elevated temperature is low and the thickness of SiC component finally formed between carbon particles is reduced.

## Claims

1. A porous inorganic shaped body comprising carbon particles up to 50 μm in average diameter and having fine pores at the surface thereof and silicon carbide component bonding the carbon particles.

2. A porous inorganic shaped body according to claim 1 wherein the specific surface area is at least 0.4 $m^2/g$.

3. A method of producing a porous inorganic shaped body comprising carbon particles having micro pores at the surface thereof and silicon carbide component binding these carbon particles, the method comprising shaping a mixture of carbon particles up to about 50 μm in average diameter and having micro pores at the surface thereof, silicon particles up to about 300 μm in average diameter and an organic binder vaporizable or decomposable under heating conditions, heating the shaped body to vaporize or decompose the organic binder, and firing the shaped body in an evacuated or inert atmosphere to obtain a sintered porous body.

4. A method according to claim 3 wherein the carbon material is at least one of pitch coke, oil coke, foundry coke, metallurgical coke, graphite, carbon black, anisotropic carbon microbeads and isotropic carbon microbeads.

5. A method according to claim 3 wherein the average diameter of the carbon particles is up to about 50 μm.

6. A method according to claim 3 wherein the carbon particles have a specific surface area of about 1 $m^2/g$ or larger.

7. A method according to claim 3 wherein the organic binder has a decomposing or vaporizing temperature of about 400 to about 600°C.

8. A method according to claim 7 wherein the organic binder is at least one of polyethylene glycol, polyvinyl alcohol and methyl cellulose.

9. A method according to claim 3 wherein about 1 to about 6 mols of carbon is used per 1 mol of silicon.

10. A method according to claim 3 wherein about 2 to about 10% weight of organic binder is used per 100 parts by weight of the combined amount of carbon and silicon.

11. A method according to claim 3 wherein the shaped body is heated at about 400 to about 600°C to eliminate the organic binder.

12. A method according to claim 3 wherein the shaped body from which the organic binder has been removed is fired at a temperature between about 1350 to about 1750°C.